# EUROPÄISCHE PATENTSCHRIFT

(11) **EP 1 604 801 B1**
(45) Veröffentlichungstag und Bekanntmachung des Hinweises auf die Patenterteilung: **07.01.2015**
(21) Anmeldenummer: 05012454.4
(22) Anmeldetag: 09.06.2005
(51) Int. Cl.: B29C 47/22

(54) **Extrusionsblaskopf**
Blowing die for extrusion
Tête de soufflage pour extrusion

(30) Priorität: 09.06.2004 DE 102004028100
(43) Veröffentlichungstag der Anmeldung: 14.12.2005
(73) Patentinhaber: THERMO-TECHNIK-SYSTEME GmbH, 29394 Lüder (DE)
(72) Erfinder: Koetke, Claus-Dieter, 29389 Bad Bodenteich (DE); Schindler, Matthias, 29413 Henningen (DE)
(74) Vertreter: Prietsch, Reiner

(56) Entgegenhaltungen:
- EP-A- 0 873 845
- DE-A1- 3 505 837
- DE-C2- 19 537 132
- US-A- 3 601 851
- US-A- 4 551 087
- US-A1- 2002 136 792
- PATENT ABSTRACTS OF JAPAN Bd. 009, Nr. 256 (M-421), 15. Oktober 1985 (1985-10-15) & JP 60 105520 A (HITACHI DENSEN KK), 11. Juni 1985 (1985-06-11)

## Beschreibung

Die Erfindung betrifft einen Extrusionsblaskopf gemäß dem Oberbegriff des Anspruches 1.

Aus der US 2002/0136792 A1 ist ein Extrusionsblaskopf mit diesen Merkmalen zum Erzeugen einer Kunststoffummantelung eines Drahtes bekannt. Bei diesem Extrusionskopf erstreckt sich der in dem Blaskopf schwenkbar gelagerte Düsenkörper bis zu der den Austrittsspalt enthaltenden Stirnfläche des Blaskopfes und umschließt konzentrisch eine auswechselbare Düse. Den Düsenkörper umgibt ein Druckring mit radialen Stellschrauben zur umfangsabhängigen Veränderung der Weite des Austrittsspaltes. In Folge des dadurch bedingten, kurzen Abstandes zwischen den Angriffspunkten der Stellschrauben an dem Düsenkörper und dessen schwenkbarer Lagerung in einer zweiteiligen Kugelpfanne ist einerseits die aufzubringende Verstellkraft hoch und andererseits die Genauigkeit der Verstellung beschränkt. Beides erschwert auch den Ersatz der Stellschrauben durch motorische Stellvorrichtungen.

Bei einem zum Extrudieren eines schlauchförmigen, also hohlen Kunststoffvorformlings geeigneten Extrusionsblaskopf bestimmt der Austrittsspalt zwischen dem Düsenkern und dem Düsenkörper die Wandstärke des aus dem erzeugten, schlauchförmigen Vorformling anschließend in einer Blasform hergestellten Hohlkörpers. Wenn es sich bei dem Hohlkörper um ein technisches Formteil mit einer von einer Geraden abweichenden Längsachse handelt, das Formteil also mindestens eine Krümmung in Längsrichtung aufweist, führt ein mit über seinen Umfang konstanter Wandstärke extrudierter Vorformling dazu, dass das Formteil eine größere Wandstärke, also eine Materialanhäufung, im Bereich des kleineren Krümmungsradius und umgekehrt eine geringere Wandstärke im Bereich des größeren Krümmungsradius hat. Aus Festigkeitsgründen darf jedoch eine Mindestwandstärke an keiner Stelle des Hohlkörpers unterschritten werden. Die Folge ist ein Mehrverbrauch an Kunststoffmaterial und eine Erhöhung des Gewichtes des fertigen Hohlkörpers. Zudem kann es bei kleinen Krümmungsradien dazu kommen, dass der fertige Hohlkörper infolge der Materialanhäufung im Bereich des kleineren Krümmungsradius innenseitig Falten und außenseitig Quetschmarken hat, wodurch sowohl die technische Funktion, z.B. als Luftleitkanal, als auch das Aussehen des Artikels leiden.

Aus der DE-A-21 28 901 ist ein Extrusionsblaskopf der einleitend angegebenen Gattung bekannt, bei dem der Düsenkörper in einer zur Längsachse des Düsenkerns rechtwinkligen Ebene um geringe Beträge verschiebbar ist, allerdings nicht zur gezielten Einstellung einer umfangsabhängig unterschiedlichen Wandstärke des Vorformlings sondern im Gegenteil zur Erzielung eines geraden, gestreckten Austritts des Vorformlings aus dem Austrittsspalt mit über den Umfang konstanter Wandstärke. Zu diesem Zweck hat der Düsenkörper auf seiner dem Austrittsspalt abgewandten Seite einen Flanschring, der zwischen einem oberen und einem unteren Haltering des Blaskopfes querverschiebbar angeordnet und von einem Verschiebering umschlossen ist, der außerhalb des Extrusionsblaskopfes mit zwei um 90° versetzt zueinander angeordneten Augen versehen ist, an welchen zweiarmige Hebel angreifen, die über Spindelantriebe schwenkbar sind. Bei dieser Konstruktion sind zur Querverschiebung des Düsenkörpers relativ zu dem Düsenkern hohe Kräfte erforderlich, weil die Krafteinleitung am oberen Ende des Düsenkörpers, d.h. in einem Bereich, in dem die Kunststoffschmelze noch unter einem sehr hohen Druck steht, erfolgt. (Die Kunststoffschmelze tritt zwar aus dem Austrittsspalt praktisch drucklos aus, hat jedoch an der Eintrittsstelle in den Blaskopf bei heutigen Maschinen einen Druck von 400 bis 500 Bar.)

Aus der DE-C-195 37 132 ist ein Extrusionsblaskopf bekannt, dessen Düsenkörper in ähnlicher Weise, jedoch zur Erzielung einer umfangsabhängig unterschiedlichen Wandstärke des Vorformlings, mittels zweier exzentrisch gelagerter, den Düsenkörper umschließender Verschieberinge und an diesen angreifenden Hebeln in zwei zueinander orthogonalen Richtungen verschiebbar ist, mit dem gleichen Nachteil der Einleitung der zur Verschiebung erforderlichen Kräfte in erheblichem Abstand von dem Austrittsspalt.

Der Erfindung liegt die Aufgabe zugrunde, einen Extrusionsblaskopf der einleitend angegebenen Gattung zu schaffen, bei dem die umfangsabhängige Veränderung der Weite des Austrittsspaltes im Vergleich zu den bekannten Konstruktionen erheblich geringere Kräfte und dementsprechend nur kleine und leichte Stellvorrichtungen erfordert.

Diese Aufgabe ist durch einen Extrusionsblaskopf mit den Merkmalen des Anspruches 1 gelöst.

Die an dem Druckring angreifenden Stellvorrichtungen können insbesondere Hydraulikzylinder, im Minimum drei Hydraulikzylinder, die dann um 120° umfangsmäßig gegeneinander versetzt sind, vorzugsweise jedoch vier Hydraulikzylinder umfassen, von denen sich je zwei paarweise gegenüberliegen, wobei die zwei Paare gegeneinander um 90° versetzt sind.

Dem Düsenkörper sind mindestens zwei umfangsmäßig um 90° gegeneinander versetzte Wegaufnehmer zugeordnet, mittels derer die Ist-Lage des Düsenkörpers bestimmt wird.

Jeder der Wegaufnehmer kann einen in Richtung auf den Druckring federbelasteten, in den Zylinderhaltern verschiebbar gelagerten Taststift umfassen.

Wie einleitend ausgeführt, richtet sich die Verteilung und Veränderung der Wandstärke, bezogen auf den Umfang des Vorformlings, nach der Geometrie des anschließend in der Blasform fertiggeblasenen Hohlkörpers und ändert sich deshalb im Regelfall über die Länge des extrudierten Vorformlings. Hierzu sind die Stellvorrichtungen über einen Rechner gesteuert, der die Ausgangssignale der Wegaufnehmer erhält und die Stellvorrichtungen nach einem vorgegebenen Programm in Abhängigkeit von den Istwertsignalen der Wegaufnehmer steuert.

Der Rechner ist im Regelfall Bestandteil einer Maschinensteuerung, die u.a. die Wandstärke des Vorformlings in Abhängigkeit von dessen Länge während des Extrudierens nach einem vorgegebenen Programm verändern kann, uzw. durch umfangssymmetrische Änderung der Weite des Austrittsspaltes, d.h. durch Heben oder Senken des Düsenkörpers relativ zu dem konischen Düsenkern.

In einer besonders vorteilhaften Ausführungsform umfassen die Stellvorrichtungen doppeltwirkende Aktoren und übertragen Druck- und Zugkräfte auf den Düsenkörper. Daher genügen zwei Stellvorrichtungen, um den Düsenkörper zu schwenken, so dass der Druckring nicht mehr orthogonal eingespannt ist. Im Vergleich zu der Ausführungsform mit z.B. vier einfachwirkenden Arbeitszylindern wird die zum Schwenken benötigte Kraft um den Betrag reduziert, die durch den gegenüberliegenden Arbeitszylinder auf den Druckring übertragen wurde und außerdem um die orthogonalen Reibkräfte. Die Stellvorrichtungen können somit nochmals leichter ausgeführt werden.

Um die Bewegungen der Aktoren möglichst zu entkoppeln, befindet sich eine Aufhängung der Stellvorrichtungen in einer Ebene, welche orthogonal zur Düsenkernachse ist und durch den Drehpunkt des Schwenklagers verläuft. Dies ermöglicht, den Düsenkörper mittels nur einer Stellvorrichtung in einer Ebene zu schwenken.

Zur Vermeidung von Zwangskräften können die Stellvorrichtungen an ihren beiden Enden gelenkig gelagert sein.

Besonders vorteilhaft ist die Verwendung von an sich bekannten Kugelgelenklagern, bestehend aus einem Kugelsegment in einer kugelkalottenförmigen Lagerschale.

Eine andere Ausführungsform arbeitet nach dem Prinzip einer Keilverstellung. Bei einer Keilverstellung wird der Düsenkörpers durch das gleichzeitige Einschieben eines Keils auf der einen Seite, und das antiparallele Herausziehen eines weiteren Keils auf der gegenüberliegenden Seite geschwenkt. Beide Keile sind synchron geführt, so dass der Druckring nicht eingespannt wird.

In einer dritten Ausführungsform kann der Düsenkörper mittels sich gegenläufig abwälzender Nocken geschwenkt werden. Die zu Materialabrieb führende Gleit- und Reibbewegung wird bei der Keilverstellung durch ein Abwälzen ersetzt.

Die Erfindung wird anhand der schematischen Zeichnung erläutert. Es zeigt:
- Figur 1: eine erste Ausführungsform im Schnitt,
- Figur 2: eine Detailzeichnung der ersten Ausführungsform mit geschwenktem Düsenkörper,
- Figur 3: eine teilgeschnittene Aufsicht der ersten Ausführungsform,
- Figur 4: eine teilgeschnittene Aufsicht der Ausführungsform gemäß Figur 1 bis 3 mit geschwenktem Düsenkörper,
- Figur 5: eine weitere Ausführungsform im Horizontalschnitt,
- Figur 6: die Ausführungsform gemäß Fig. 5 im Vertikalschnitt,
- Figur 7: eine teilgeschnittene Aufsicht auf eine Ausführungsform mit einer Keilverstellung und
- Figur 8: eine teilgeschnittene Aufsicht auf eine Ausführungsform mit Nockenverstellung.

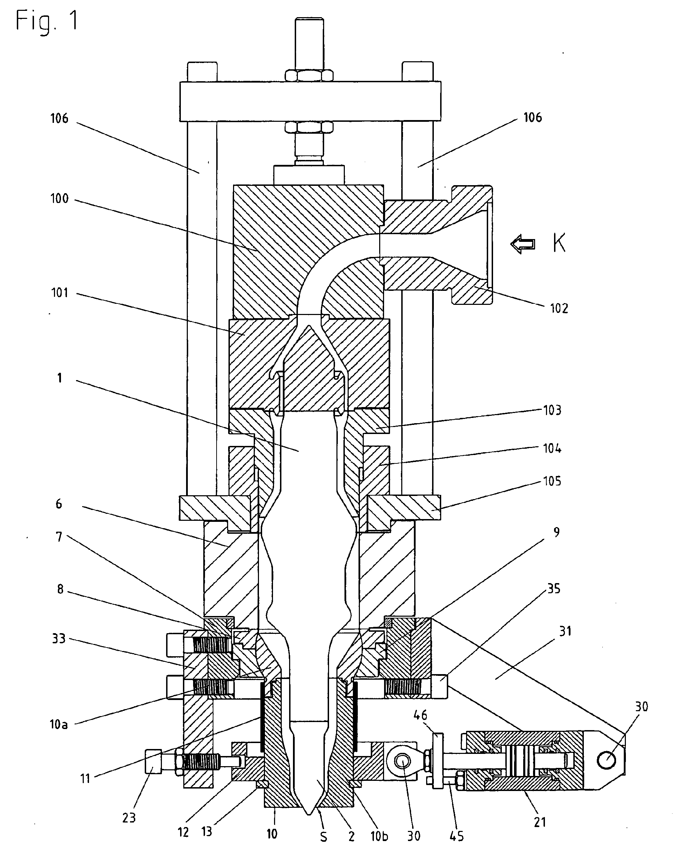

Figur 1 zeigt schematisch einen Extrusionsblaskopf mit einem feststehenden Kopfteil 100, mit dem ein Kernträger 101 verbunden ist, der einen Kernhalter 1 trägt. Über ein Zwischenstück 102 und einen Kanal in dem Kopfteil 100 wird dem den Kernträger 101 umschließenden Raum die durch den Pfeil K symbolisierte Kunststoffschmelze aus einem üblichen Extruder unter einem Druck von einigen hundert Bar zugeführt. An den Kernträger 101 schließt sich nach unten ein Führungsring 103 an. Auf diesem sitzt eine Führungsbüchse 104, die mit einer Grundplatte 105 verbunden ist, die die im Folgenden näher beschriebenen weiteren Teile des Blaskopfes trägt. In an sich bekannter Weise ist die Grundplatte 105 über Führungsstangen 106 zur im Idealfall über den Umfang gleichmäßigen Ein- und Verstellung der Wandstärke des aus dem Blaskopf extrudierten schlauchförmigen Vorformlings heb- und senkbar.

An der Grundplatte 105 ist über einen Zwischenring 6 ein Gehäuse 7 befestigt. Das Gehäuse 7 umschließt und haltert ein Kugelpfannenoberteil 8 und einen Kugelpfannenunterteil 9. Diese bilden zusammen eine ringförmig umlaufende Lagerschale für einen Düsenkörper 10, der aus einem Oberteil 10a mit in der Lagerschale 8, 9 aufgenommener, kugelkalottenförmiger Außenfläche und einem mit diesem auswechselbar verbundenen Unterteil 10b besteht. Der Düsenkörper 10 ist von einem Heizband 11 umgeben.

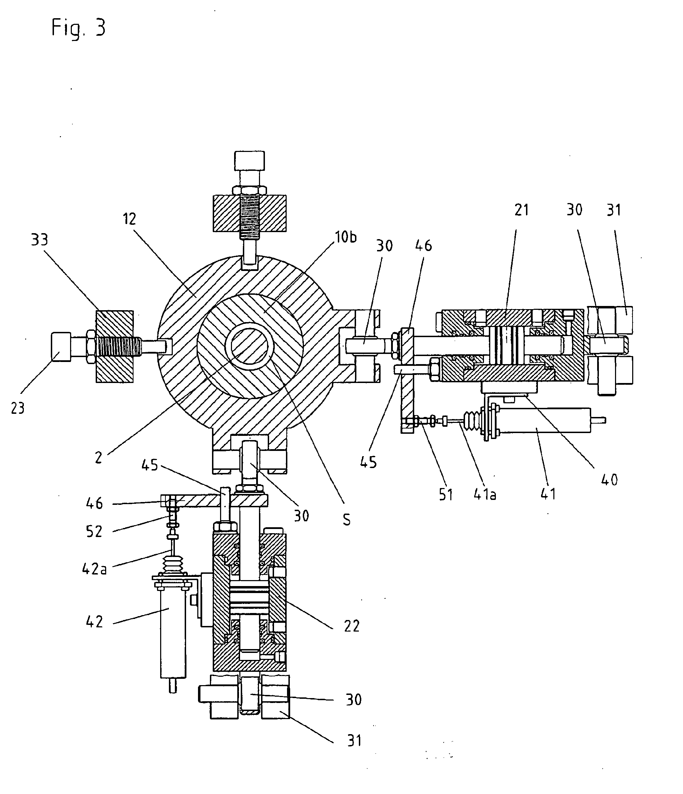

Das Düsenunterteil 10b umschließt einen mit dem Kernhalter 1 auswechselbar verbundenen Düsenkern 2. Zwischen dem Düsenkern 2 und dem Düsenköperunterteil 10b verbleibt ein Austrittsspalt S (vergleiche auch Fig. 3), dessen Weite umfangsunabhängig durch Heben oder Senken der Grundplatte 105 mittels der Stangen 106 veränderbar ist.

Zusätzlich ist die Weite des Spaltes S umfangsabhängig durch Schwenken des Düsenkörpers 10 in seiner durch die Teile 8 und 9 gebildeten Lagerschale veränderbar. Hierzu sitzt auf dem Düsenkörperunterteil 10b nahe dessen unterem Ende ein Druckring 12, der durch einen Sicherungsring 13 gehalten wird. An diesem greifen doppeltwirkende Hydraulikzylinder 21 und 22 an (vgl. Fig. 3), die sich an je einem Halter 31 abstützen. Die Kolben der Zylinder 21 und 22 (vgl. Fig. 3) werden zur Erzielung eines in Abhängigkeit vom Umfang sich ändernden Verlaufs der Weite des Austrittsspaltes S mit Hydraulikflüssigkeit über nicht dargestellte Ventile beaufschlagt, die über den Rechner der ebenfalls nicht dargestellten Maschinensteuerung betätigt werden. Die jeweilige Ist-Stellung wird mittels der Wegaufnehmer 41, 42 gemessen (vgl. Fig. 3), die ihre Signale an die Maschinensteuerung liefern. Diese bzw. der Rechner vergleicht die Ist-Werte mit den in einem abgespeicherten Programm in Abhängigkeit von der jeweils extrudierten Länge des Vorformlings enthaltenen Soll-Werten und regelt durch Ansteuerung der Hydraulikventile die Stellung des Düsenkörpers 10 relativ zu dem Düsenkern 2 während des Extrudierens des Vorformlings aus dem Spalt S, so dass der Vorformling an jeder Stelle den vorgegebenen Verlauf der Wandstärke in Umfangsrichtung zusätzlich zu der bekannten globalen Wandstärkenbeeinflussung durch Heben oder Senken des Düsenkörpers 10 über die Stangen 106 hat.

An dem Gehäuse 7 ist mittels einer Schraube 35 ein Zylinderhalter 31 befestigt. Zwischen dem Zylinderhalter 31 und dem Druckring 12 befindet sich ein Arbeitszylinder 21, der sich gegen den Zylinderhalter 31 und den Druckring 12 über je ein Gelenklager 30 abstützt. An der dem Zylinderhalter 31 gegenüberliegenden Seite des Gehäuses 7 ist mittels zweier Schrauben ein Halter 33 für einen verstellbaren Führungsstift 23 befestigt. Der Führungsstift 23 greift in eine Ausnehmung des Druckrings 12 ein. Diese Führung verhindert eine Verdrehung des Düsenkörpers 10 ebenso wie eine Beschädigung des Düsenkörpers 10 oder des Düsenkerns 2, da sie gleichzeitig einen Anschlag bildet.

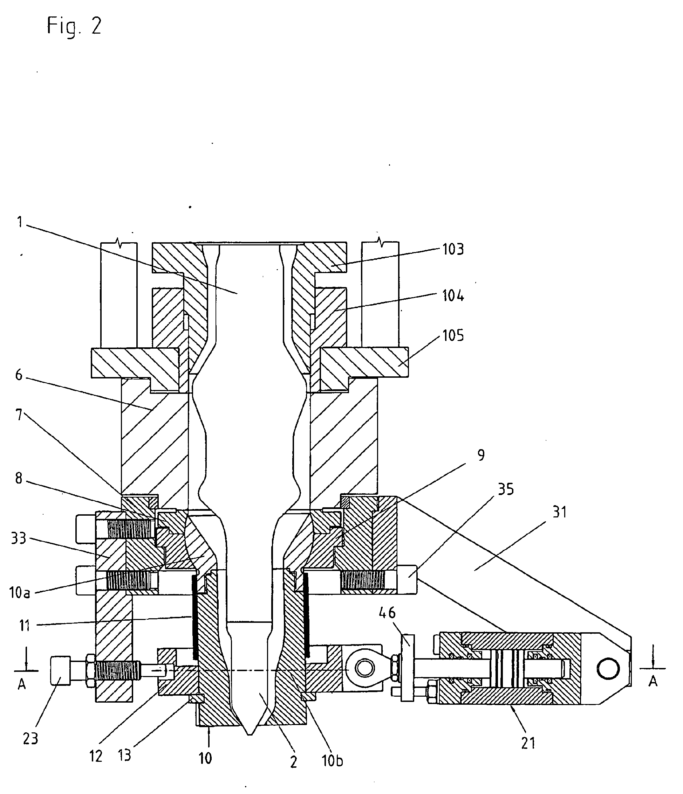

Figur 2 zeigt einen vergrößerten Ausschnitt aus Figur 1. Der Düsenkörper 10 ist nach rechts geschwenkt dargestellt.

In Figur 3 sind die zwei um 90° versetzt angeordneten doppeltwirkende Arbeitszylinder 21 und 22 sowie die ihnen jeweils gegenüberliegenden Führungen dargestellt. An den Arbeitszylindern 21, 22 sind handelsübliche Wegaufnehmer 41, 42 mittels je eines Haltewinkels 40 befestigt. Jeder der Wegaufnehmer 41, 42 umfasst einen verschiebbaren Taster 41a, 42a, der gegen einen Taststift 51 bzw. 52 anliegt, welcher über einen Taststifthalter 46 an der Kolbenstange befestigt ist. Die Taststifthalter 46 werden von je einem Stift 45 durchsetzt. Die beiden Stifte 45 sind an je einem Arbeitszylinder 21 und 22 befestigt und führen die Taststifthalter 46.

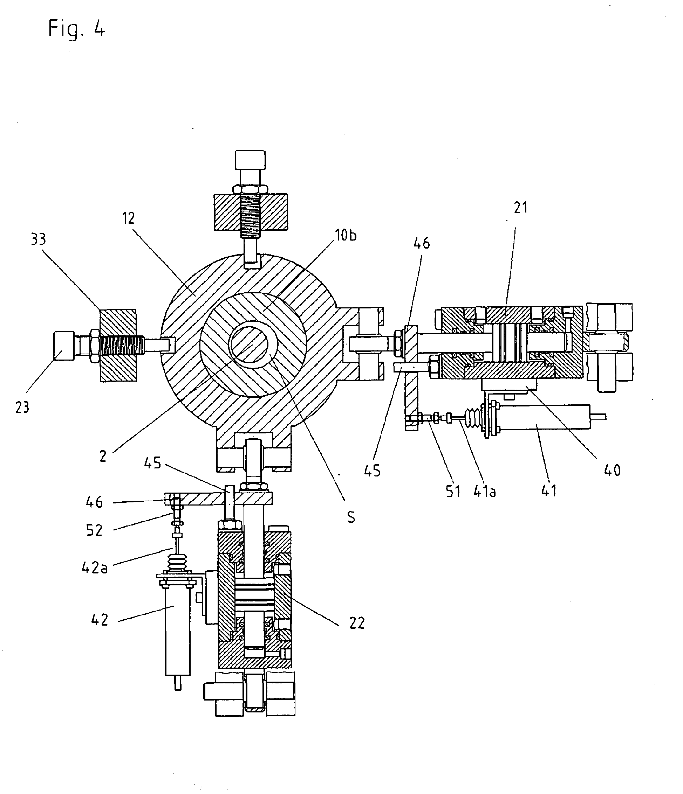

Figur 4 zeigt die Ausführungsform gemäß Figur 3, jedoch mit geschwenktem Düsenkörper.

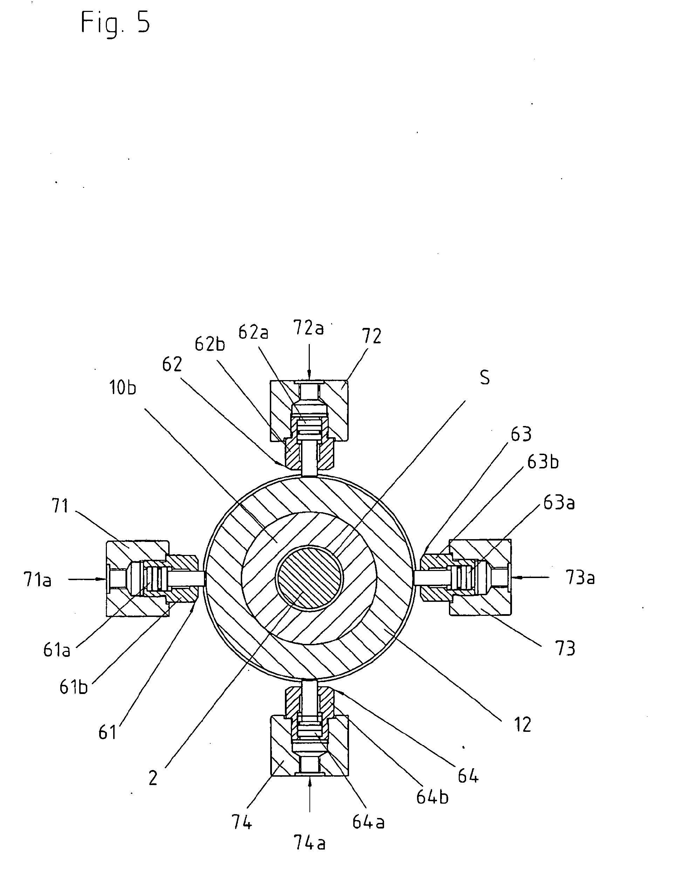

Figur 5 zeigt eine Ausführungsform, bei der die radial gerichteten Verstellkräfte mittels kleiner, einfach wirkender Arbeitszylinder 61, 62, 63, 64 erzeugt werden, die um 90° versetzt um den Umfang des Druckringes 12 verteilt angeordnet sind, so dass sie sich jeweils paarweise gegenüberliegen. Jeder Arbeitszylinder besteht wie der Arbeitszylinder 61 aus einem Kolben 61a, dessen Kolbenstange mit ihrem freien Ende gegen den Druckring 12 anliegt. Der Kolben 61a sitzt in einem Zylindergehäuse 61b, das in einen Zylinderhalter wie 71 eingeschraubt ist. Jeder Zylinderhalter 71, 72, 73, 74 hat Anschlüsse und Bohrungen 71a, 72a, 73a, 74a zur Beaufschlagung der Kolben 61a, 62a, 63a, 64a mit einer Hydraulikflüssigkeit.

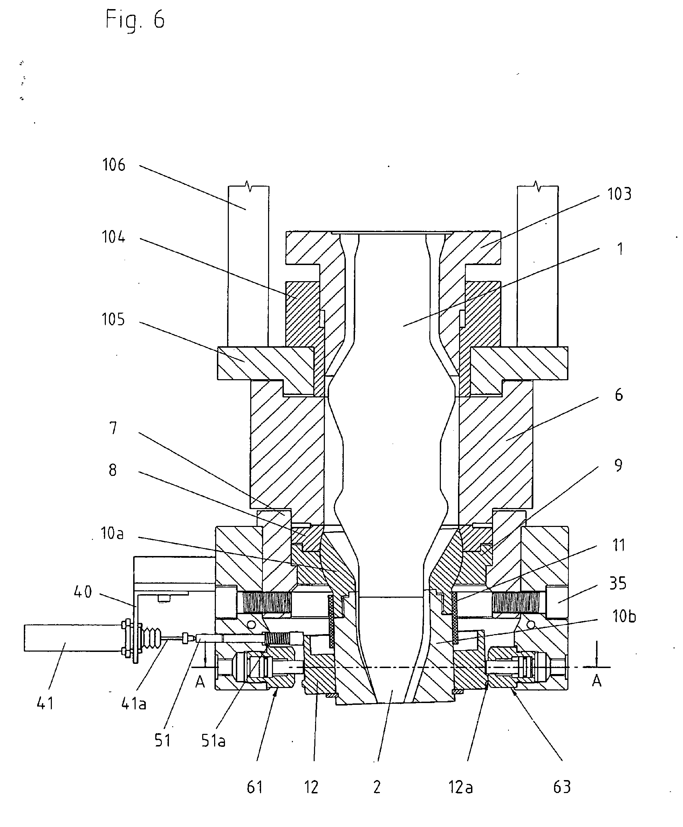

Figur 6 zeigt die Ausführungsform gemäß Figur 5 im Vertikalschnitt und veranschaulicht die sich aus einer maximalen Verstellung des Düsenkörpers 10 in Bezug auf den Düsenkern 2 ergebende, umfangsabhängig von nahezu Null auf einen Maximalwert und erneut auf nahezu Null abnehmende, umfangsabhängige Weite des Austrittsspaltes S. Zur Begrenzung des maximalen Verstellweges des Düsenkörpers 10 hat der Druckring 12 einen Ringwulst 12a, mit dem er am Ende des Verstellweges gegen den betreffenden Zylinder, hier den Zylinder 61, anliegt, um eine Beschädigung durch Anschlag des Düsenkörpers 10 gegen den Düsenkern 2 zu vermeiden. Auch in dieser Ausführungsform sind zwei Wegaufnehmer 41 und 42 vorhanden (nur 41 dargestellt). Der verschiebbare Taster 41a liegt gegen einen Taststift 51 an, der in dem Zylinderhalter geführt und mit seinem anderen Ende mittels einer Schraubenfeder 51a gegen den Mantel des Druckringes 12 gehalten ist.

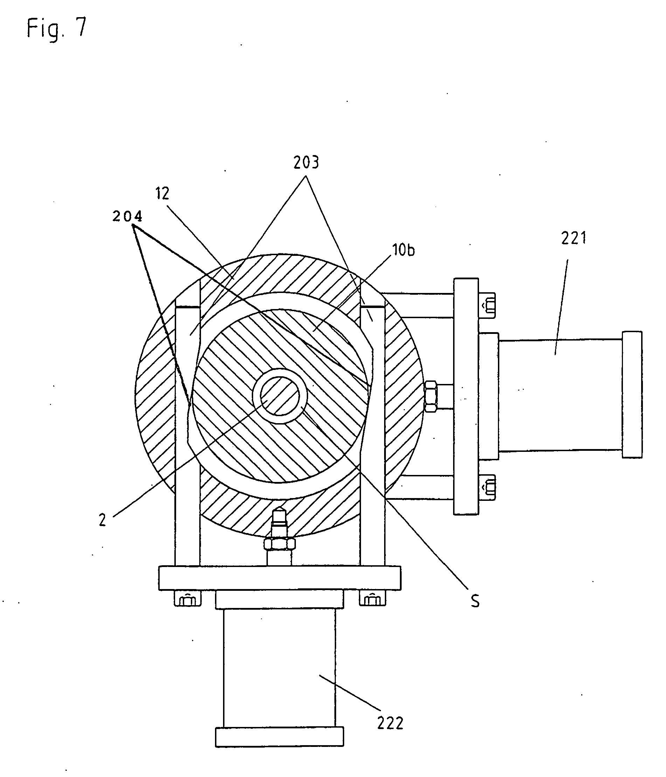

Figur 7 verdeutlicht das Prinzip des Verschwenkens des Düsenkörpers mittels einer Keilverstellung. In dieser Ausführungsform erzeugen zwei um 90° versetzt angeordnete doppeltwirkende Hydraulikzylinder 221 und 222, die zur Verstellung des Düsenkörpers über sein Unterteil 10b notwendigen Radialkräfte. Diese Radialkräfte werden mittels zweier Stangenpaare 203, zwischen denen der Düsenkörper sitzt, übertragen. Die Kraftübertragung erfolgt nach dem Keilprinzip. Dazu weist jedes Stangenpaar an seiner Innenseite punktsymmetrisch zur Symmetrieachse des Düsenkörpers geformte Ausnehmungen auf, so dass die Innenseiten der Stangen 203 gegenläufige Keilflächen 204 bilden.

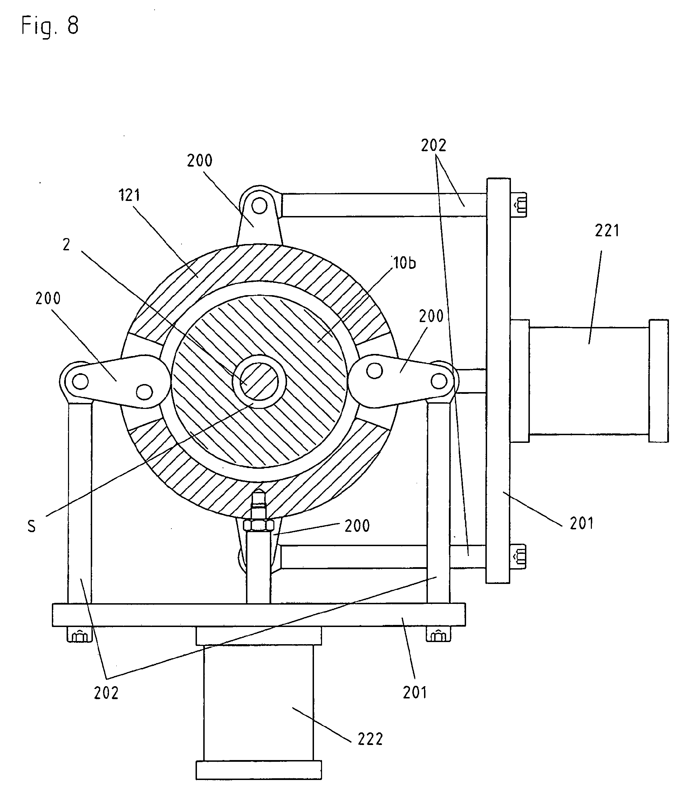

Figur 8 zeigt eine Ausführungsform mit einer Nockenverstellung. An einem feststehenden Druckring 121 sind sich vier paarweise gegenüberliegende und paarweise gegenläufig an dem Düsenkörperunterteil 10b abwälzende, um 90° versetzt angeordnete Nocken 200 drehbar angebracht. Die Nocken 200 sind im Schnitt in etwa eiförmig und exzentrisch gelagert. Die Nockenpaare werden durch je einen doppelwirkenden Hydraulikzylinder 221 oder 222 mittels je eines Stangenpaares 202 verdreht. Jedes Stangenpaar 202 ist über einen Abstandhalter 201 mit dem Gehäuse je eines der Hydraulikzylinder 221 oder 222 verbunden. Die Kolbenstangen der Hydraulikzylinder 221 und 222 sind an dem Druckring 12 festgelegt.

## Patentansprüche

1. Extrusionsblaskopf, geeignet zum Extrudieren eines schlauchförmigen Kunststoffvorformlings aus einem Austrittsspalt (S) zwischen einem feststehenden Düsenkern (2) und einem in dem Blaskopf schwenkbar gelagerten Düsenkörper (10), der mittels eines Druckringes (12) und an diesem angreifenden Stellvorrichtungen (61, 62, 63, 64; 21, 22; 221, 222) zur umfangsabhängigen Veränderung der Weite des Austrittsspaltes (S) verstellbar ist, wobei der Düsenkörper (10) zu seiner schwenkbaren Lagerung eine kugelkalottenförmige Außenfläche hat, mit der er in einer komplementären, aus einem Kugelpfannenoberteil (8) und einem Kugelpfannenunterteil (9) bestehenden Lagerschale in dem Blaskopf aufgenommen ist **dadurch gekennzeichnet dass** der Düsenkörper (10) aus einem Oberteil (10a) mit der kugelkalottenförmigen Außenfläche und einem in axialer Richtung an das Oberteil anschließenden und auswechselbar mit diesem verbundenen Unterteil (10b) besteht, auf welchem der Druckring (12) sitzt.

2. Extrusionsblaskopf nach Anspruch 1, **dadurch gekennzeichnet, dass** die Stellvorrichtungen doppelt wirkende Aktoren (21, 22; 221, 222) umfassen.

3. Extrusionsblaskopf nach Anspruch 2, **dadurch gekennzeichnet, dass** die Aktoren doppeltwirkende Hydraulikzylinder (21, 22; 221, 222) sind.

4. Extrusionsblaskopf nach Anspruch 2, **dadurch gekennzeichnet, dass** die Aktoren Spindelantriebe sind.

5. Extrusionsblaskopf nach Anspruch 1 oder 2, **dadurch gekennzeichnet, dass** die an einem Druckring (12) angreifenden Stellvorrichtungen vier Hydraulikzylinder (61 bis 64) umfassen, von denen sich je zwei paarweise gegenüberliegen, wobei die zwei Paare gegeneinander um 90° versetzt sind.

6. Extrusionsblaskopf nach einem der Ansprüche 1 bis 5, **dadurch gekennzeichnet, dass** dem Düsenkörper (10) mindestens zwei umfangmäßig um 90° gegeneinander versetzte Wegaufnehmer (41, 42) zugeordnet sind.

7. Extrusionsblaskopf nach Anspruch 6, **dadurch gekennzeichnet, dass** jeder Wegaufnehmer (41, 42) einen in Richtung auf den Druckring (12) federbelasteten, in einem Zylinderhalter verschiebbar gelagerten Taststift (51, 52) umfasst.

8. Extrusionsblaskopf nach einem der Ansprüche 6 oder 7, **dadurch gekennzeichnet, dass** ein Rechner aus Ausgangssignale der Wegaufnehmer (41, 42) erhält und die Stellvorrichtungen nach einem vorgegebenen Programm in Abhängigkeit von den Istwertsignalen der Wegaufnehmer 41, 42) steuert.

9. Extrusionsblaskopf nach einem der Ansprüche 1 bis 8, **dadurch gekennzeichnet, dass** eine Aufhängung der Stellvorrichtungen sich in einer Ebene, welche orthogonal zur Düsenachse ist und durch den Drehpunkt des Schwenklagers verläuft, befindet.

10. Extrusionsblaskopf nach einem der Ansprüche 1 bis 9, **dadurch gekennzeichnet, dass** die Aufhängungen der Stellvorrichtungen Gelenklager (30) sind.

11. Extrusionsblaskopf nach einem der Ansprüche 1 bis 10, **dadurch gekennzeichnet, dass** der Düsenkörper (10) relativ zu dem konischen Düsenkern (2) heb- und senkbar ist.

## Claims

1. An extrusion blow head suitable for extruding a tubular plastic preform from an outlet gap (S) between a fixed die core (2) and a die body (10) pivotally supported in the blow head, which can be adjusted by means of a pressure ring (12) and actuating devices (61,62,63;21,22;221,222) engaging therewith for changing the width of the outlet gap (S) as a function of the circumference, wherein the die body (10) comprises an external surface having a generally spherical shape to enable its pivotable mounting by which it is received in the blow head in a complementary bearing shell consisting of an upper ball socket part (8) and a lower ball socket part (9), **characterized in that** the die body (10) comprises an upper section (10a) having the external surface with the generally spherical shape and a lower section (10b) which is adjacent to the upper portion in an axial direction and is removably connected therewith and on which the pressure ring (12) is seated.

2. The extrusion blow head according to claim 1, **characterized in that** the actuating devices comprise double-acting actuators (21,22;221,222).

3. The extrusion blow head according to claim 2, **characterized in that** the actuators are double-acting hydraulic cylinders (21,22;221,222).

4. The extrusion blow head according to claim 2, **characterized in that** the actuators are spindle drives.

5. The extrusion blow head according to claim 1 or 2, **characterized in that** actuating devices engaging the pressure ring (12) comprises four hydraulic cylinders (61 to 64), each two of which lie diametrically opposite in pairs, the two pairs being offset by 90° from one another.

6. The extrusion blow head according to any one of claims 1 to 5, **characterized in that** at least two displacement sensors (41,42) are assigned to the die body (10), wherein the displacement sensors are offset around the circumference by 90° from one another.

7. The extrusion blow head according to claim 6, **characterized in that** each displacement sensor (41,42) comprises a feeler pin (51,52) spring-loaded in the direction of the pressure ring (12) and displaceably mounted in a cylinder holder.

8. The extrusion blow head according to any one of claims 6 or 7, **characterized in that** a computer receives output signals of the displacement sensors (41,42) and controls the actuating devices according to a predefined program as a function of the actual value signals of the displacement sensors (41,42).

9. The extrusion blow head according to any one of claims 1 to 8, **characterized in that** a suspension of the actuating devices is located in a plane that is orthogonal to the die core axis and runs through the pivot point of the pivot bearing.

10. The extrusion blow head according to any one of claims 1 to 9, **characterized in that** the suspensions of the actuating devices are pivot bearings (30).

11. The extrusion blow head according to any one of claims 1 to 10, **characterized in that** the die body (10) can be lifted and lowered relative to the conical die core (2).

## Revendications

1. Tête d'extrusion-soufflage, qui convient pour l'extrusion d'une ébauche de matière plastique en forme de gaine d'une fente (S) de sortie entre un noyau (2) de filière fixe et un corps (10) de filière, qui est monté pivotant dans la tête de soufflage et qui est réglable au moyen d'un cône (12) de serrage et de dispositifs (61, 62, 63, 64; 21, 22; 221, 222) de réglage l'attaquant pour modifier, en fonction du pourtour, la largeur de la fente (S) de sortie, le corps (10) de la filière ayant, pour son montage pivotant, une surface extérieure en forme de calotte sphérique, par laquelle il est reçu dans la tête de soufflage dans une coquille de coussinet complémentaire, composée d'une partie (10) supérieure de coussinet sphérique et d'une partie (9) inférieure de coussinet sphérique, **caractérisée en ce que** le corps (10) de la filière est constitué d'une partie (10a) supérieure ayant la surface supérieure en forme de calotte sphérique et d'une partie (10b) inférieure se raccordant dans la direction axiale à la partie supérieure et reliée à celle-ci de manière remplaçable, partie (10b) inférieure sur laquelle est mis l'anneau (12) de serrage.

2. Tête d'extrusion-soufflage suivant la revendication 1, **caractérisée en ce que** les dispositifs de réglage comprennent des actionneurs (21, 22; 221, 222) à double effet.

3. Tête d'extrusion-soufflage suivant la revendication 2, **caractérisée en ce que** les actionneurs sont des vérins (21, 22; 221, 222) hydrauliques à double effet.

4. Tête d'extrusion-soufflage suivant la revendication 2, **caractérisée en ce que** les actionneurs sont des entraînements à broche.

5. Tête d'extrusion-soufflage suivant la revendication 1 ou 2, **caractérisée en ce que** les dispositifs de réglage attaquant le cône (12) de serrage comprennent quatre vérins (61 à 64) hydrauliques, dont respectivement deux sont opposés par paire, les deux paires étant décalées l'une par rapport à l'autre de 90°.

6. Tête d'extrusion-soufflage suivant l'une des revendications 1 à 5, **caractérisée en ce qu'**au moins deux capteurs (41, 42) de course, décalés les uns par rapport à l'autre sur le pourtour de 90°, sont associés au corps (10) de la filière.

7. Tête d'extrusion-soufflage suivant la revendication 6, **caractérisée en ce que** chaque capteur (41, 42) de course comprend une tige (51, 52) de palpage soumise à l'action d'un ressort dans la direction du cône (12) de serrage et montée coulissante dans un porte-cylindre.

8. Tête d'extrusion-soufflage suivant l'une des revendications 6 ou 7, **caractérisée en ce qu'**un ordinateur reçoit des signaux de sortie des capteurs (41, 42) de course et commande les dispositifs de réglage suivant un programme donné à l'avance en fonction des signaux de valeur réelle des capteurs (41, 42) de course.

9. Tête d'extrusion-soufflage suivant l'une des revendications 1 à 8, **caractérisée en ce qu'**une suspension des dispositifs de réglage se trouve dans un plan, qui est orthogonal à l'axe de la filière et passe par le centre de rotation du palier pivotant.

10. Tête d'extrusion-soufflage suivant l'une des revendications 1 à 9, **caractérisée en ce que** les suspensions des dispositifs de réglage sont des articulations (30) à rotule.

11. Tête d'extrusion-soufflage suivant l'une des revendications 1 à 10, **caractérisée en ce que** le corps (10) de la filière peut être soulevé et abaissé par rapport au noyau (2) conique de la filière.
